# EUROPEAN PATENT SPECIFICATION

(11) **EP 0 590 770 B1**
(45) Date of publication and mention of the grant of the patent: **24.02.1999**
(21) Application number: 93306263.0
(22) Date of filing: 09.08.1993
(51) Int. Cl.: C10L 1/22, C08G 65/32, C08G 65/28, C10L 10/00, C07D 265/32

(54) **Method of preparing an amidoalkanolamine composition for use in fuel compositions**
Verfahren zur Herstellung einer Amidoalkanolaminzusatz-Zusammensetzung für Kraftstoffe
Une méthode de préparation d'une composition d'amidoalcanolamine pour combustibles

(30) Priority: 01.09.1992 US 938806
(43) Date of publication of application: 06.04.1994
(73) Proprietor: TEXACO DEVELOPMENT CORPORATION, White Plains, New York 10650 (US)
(72) Inventor: Su, Wei-Yang, Austin, Texas 78761 (US); Herbstman, Sheldon, New City, New York 10956 (US); Russo, Joseph Michael, Poughkeepsie, New York 12603 (US); Zimmerman, Robert LeRoy, Austin, Texas 78759 (US); Cuscurida, Michael, Austin, Texas 78761 (US)
(74) Representative: Brock, Peter William

(56) References cited:
- EP-A- 0 100 665
- EP-A- 0 263 702
- EP-A- 0 356 725
- EP-A- 0 440 508
- US-A- 4 228 096
- US-A- 4 477 261
- US-A- 4 518 782
- US-A- 5 136 035
- US-A- 5 234 478

## Description

This invention relates to a method for preparing an amidoalkanolamine that can act as an additive composition for use in motor fuels. The additive is obtained by reacting a 4-alkyl-2-morpholinone with an alkoxypolyoxyalkylene amine. The resulting motor fuel - soluble amido alkanolamine compound provides a number of valuable properties in a motor fuel composition.

The combustion of a hydrocarbon motor fuel in an internal combustion engine leads to the formation and accumulation of deposits on various parts of the combustion chamber, as well as on the fuel intake and exhaust system of the engine. The presence of deposits in the combustion chamber seriously reduces the operating efficiency of the engine. Firstly, deposit accumulation within the combustion chamber inhibits heat transfer between the chamber and the engine cooling system. this leads to higher temperatures within the combustion chamber, resulting in increases in the end gas temperature of the incoming charge. Consequently, end gas autoignition occurs, causing engine knock. In addition, the accumulation of deposits within the combustion chamber reduces the volume of the combustion zone, causing the compression ratio to exceed its designed figure. This in turn can also lead to engine knocking. A knocking engine does not effectively utilize the energy of combustion. Moreover, a prolonged period of engine knocking can cause stress fatigue and wear in pistons, connecting rods, bearings and cam rods of the engine. The phenomenon noted is characteristic of gasoline powered internal combustion engines. It may be overcome by powering the engine with a higher octane gasoline, which resists knocking. This need for a higher octane gasoline as mileage accumulates has become known as the engine octane requirement increase (ORI) phenomenon. It is particularly advantageous if engine ORI can be substantially reduced or eliminated by preventing or modifying deposit formation in the combustion chambers of the engine.

Another problem common to internal combustion engines is the formation of intake valve deposits. Intake valve deposits interfere with valve closing, and eventually will lead to valve burning. Such deposits interfere with valve motion and valve seating, and tend to reduce the volumetric efficiency of the engine and to limit the maximum design power. Valve deposits may be produced from thermally and oxidatively unstable fuel, or from lubricating oil oxidation products. The hard carbonaceous deposits which are produced, collect in the tubes and runners that are part of the exhaust gas recirculation (EGR) flow. These deposits are believed to be formed from exhaust particles which are subjected to rapid cooling while mixing with the air-fuel mixture. Reduced EGR flow can result in engine knock and increases in nitric oxide, NOₓ, emission. It would therefore be desirable to provide a motor fuel composition which minimizes or overcomes the formation of intake valve deposits.

US-A-4747851 discloses a polyoxyalkylene diamine of the formula: 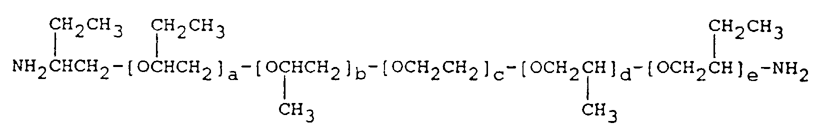 where c is 5 to 150, b+d is 5 to 150, and a+e is 2 to 12. Motor fuel compositions comprising the polyoxyalkylene diamine, alone or in combination with a polymer/copolymer additive, are also disclosed.

US-A-4659337 discloses the use of the reaction product of maleic anhydride, a polyether polyamide containing oxyethylene and oxypropylene ether moieties, and a hydrocarbyl polyamine, in a gasoline motor fuel, to reduce engine ORI and provide carburettor detergency.

US-A-4659336 discloses the use of a mixture of (i) the reaction product of maleic anhydride, a polyether polyamine containing oxyethylene and oxypropylene ether moieties, and a hydrocarbyl polyamine, and (ii) a polyolefin polymer/copolymer, as an additive in motor fuel compositions to reduce engine ORI.

US-A-4631069 discloses an alcohol-containing motor fuel composition which additionally comprises an anti-wear additive which is the reaction product of a dibasic acid anhydride, a polyoxyisopropylene diamine of the formula: 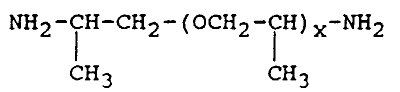 where x is 2 to 68, and an N-alkyl-alkylene diamine.

EP-A-0100665 (Chevron) describes control additives for hydrocarbon fuels. The additives are hydrocarbyl-terminated poly(oxyalkylene) polyamine ethanes comprising a hydrocabyl-terminated poly(oxyalkylene) chain formed from 1 to 30 2-5 carbon oxyalkylene units bonded to an ethane or branched ethane chain containing from 2 to 8 carbon atoms in turn bonded to a nitrogen atom of a polyamine having from 2 to 12 amine nitrogens and from 2 to 40 carbon atoms with a carbon nitrogen ratio between 1:1 and 10:1. The terminal hydrocarbyl group contains from 1 to 30 carbon atoms and the additive has a molecular weight in the range from 300 to 2500.

US-A-4477261 (Texaco) describes a polyether amino amide additive and to a motor fuel composition containing same which inhibits ORI and has good carburetor detergency properties. The additive is represented by the formula: 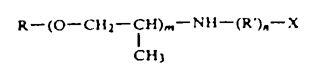 in which R is a hydrocarbyl radical having from 6 to 18 carbon atoms, m is a integer from 2 to 4, R' is divalent alkylene radical having from 2 to 3 carbon atoms, n is 1 or 2, and X is an amine-based radical.

US-A-4643738 discloses a motor fuel composition comprising a deposit-control additive, which is the reaction product of the dibasic acid anhydride, a polyoxyisopropylene diamine of the formula: 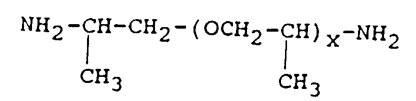 where x is 2 to 50, and an N-alkyl-alkylene diamine.

US-A-4604103 discloses a motor fuel deposit control additive for use in internal combustion engines which maintains cleanliness of the engine intake system without contributing to combustion chamber deposits or engine ORI. the additive is a hydrocarbyl polyoxyalkylene polyethylene amine of molecular weight range 300 to 2,500 having the formula: 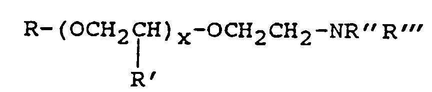 where R is a hydrocarbyl radical having 1 to 30 carbon atoms: R' is methyl or ethyl; x is 5 to 30, and R" and R‴ are independently selected from hydrogen and -(CH₂CH₂NH)_{y}-H, where y is 0 to 5.

US-A-4581040 discloses a deposit-inhibitor additive for fuel compositions, which is the condensation product obtained by (i) reacting a dibasic acid anhydride with a polyoxyisopropylene diamine of the formula: 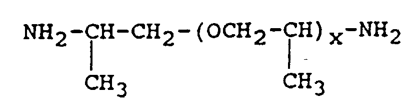 where x is 2 to 50, thereby forming a bis-maleic acid; and
(ii) reacting the maleamic acid with a polyalkylene polyamine.

Co-pending U.S. Application Serial No. 07/896,700 discloses alkylphenoxypolyoxyalkylene amidoalkanolamines.

US-A-4357148 discloses a motor fuel additive useful in controlling ORI which is the combination of (a) an oil-soluble aliphatic polyamine containing at least one olefinic polymer chain, and (b) a polymer, copolymer, or corresponding hydrogenated polymer or copolymer, of a C₂-C₆ mono-olefin having a molecular weight of 500 to 1,500.

US-A-4234321 discloses a hydrocarbylpoly(oxyalkylene) ureylene carbamate having a molecular weight of 600 to 6000 for use in gasoline or diesel fuel compositions.

Objects of this invention are to provide a novel additive reaction product which may be employed in fuel compositions, and particularly in a motor fuel composition;
to provide a fuel additive reaction product and a motor fuel composition which inhibits the formation of intake valve deposits in an internal combustion engine;
to provide a fuel additive and a fuel composition which inhibits or reduces the formation of combustion chamber deposits in an internal combustion engine; and
to provide a concentrate composition which may be added to motor fuel to provide motor fuel compositions.

The present invention provides a method of preparing an amidoalkanolamine composition having the formula: 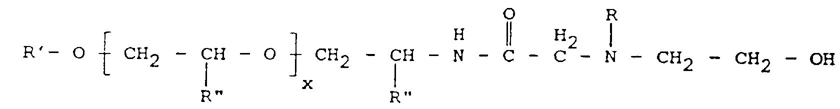 wherein R is a monovalent aliphatic radical having 1 to 10 carbon atoms, e.g. methyl, ethyl or propyl; R' is a hydrocarbyl radical having 8 to 30 carbon atoms, e.g. an alkyl, alicyclic or alkylalicyclic radical; R" represents methyl or a mixture of hydrogen and methyl radicals; and x is 5 to 50,
characterised by reacting a 4-substituted-2-morpholinone having the formula: 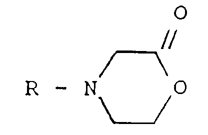 with a hydrocarbyloxypolyoxyalkylene amine having the formula: 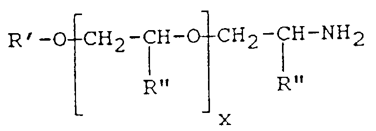 wherein R, R', R" and x have the meanings given above. A preferred reaction temperature is from 10 to 200°C.

The invention also provides a fuel composition comprising combustible hydrocarbons and containing from 0.00015 to 1 weight percent of an amidoalkanolamine composition prepared as defined above.

In the formula given above, R' may be a straight chain, an isomeric branched chain, or a cyclo aliphatic hydrocarbyl radical, or a mixture of these. Typical monovalent alkyl radicals include normal C₁₆-C₁₈ alkyl, C₁₂-C₂₀ alkyl, n-nonylcyclohexyl, and n-oligomeric species with a chain length of C₂₀-C₃₀. Preferably, R' represents a saturated monovalent aliphatic radical having 12 to 24 carbon atoms, and more preferably an aliphatic radical having 14 to 20 carbon atoms. A preferred value for x is from 6 to 30, with the most preferred value being from 10 to 20.

As indicated above, the internal radical represented by the formula: 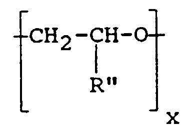 may be a propylene oxide radical or a mixture of propylene oxide and ethylene oxide radicals. When a mixture of propylene oxide and ethylene oxide radicals are used, the ratio of propylene oxide radical to ethylene oxide radicals employed, and hence the ratio of R'' = methyl to R'' = H, is preferably from 2:3 to 9.99:0.01. A more preferred mole ratio range of propylene oxide to ethylene oxide is from 7:3 to 9.99:0.01.

The 4-alkyl-2-morpholinone reactant and the alkoxypolyoxyalkylene amine reactant are preferably reacted in a 1:1 mole ratio. While other mole ratios are contemplated, no significant advantage is realized in departing from equimolar reaction ratios.

The following Examples I to IV illustrate the preparation of the additive of the invention.

### EXAMPLE I

### A. Preparation of 13.5 Mole Propylene Oxide Adduct of Aliphatic Alcohol

A 40 litre reactor was charged with 6.8 Kg (15 pounds) of a mixture of C₁₆ and C₁₈ aliphatic alcohols and 136.5 grams of 45 percent potassium hydroxide. The reactor was then purged with pre-purified nitrogen. Maintaining a nitrogen purge, the reactor was heated to 110°C and dried to a water content of less than 0.1 percent, using both vacuum and nitrogen stripping. 20.84 Kg (45.9 lbs.) of propylene oxide was then reacted at 110 to 115°C and 445 kPa (50 psig) over a nine-hour period. The reaction mixture was then digested to an equilibrium pressure and purged with nitrogen for 30 minutes. The alkaline product was then neutralized at 95°C, by stirring for two hours with 369 grams of Magnesol 30/40 absorbent which was added as an aqueous slurry. After neutralization, the product was vacuum stripped to a minimum pressure, nitrogen stripped, and filtered. Properties of the finished product are given in Table I below.

**Table I**

| Properties | |
|---|---|
| Acid no., mg KOH/g | 0.004 |
| Hydroxyl no., mg KOH/g | 58.7 |
| Water, wt. % | 0.02 |
| pH in 10:6 isopropanol-water | 6.8 |
| Colour, Pt-Co | 125 |
| Sodium, ppm | 2.5 |
| Potassium, ppm | 1.8 |
| Viscosity, 38°C, cs | 53.7 |

### B. Preparation of Alkoxypolyoxypropylene Amine

A tubular reactor filled with 600 cm³ of a nickel catalyst was fed with 182 g/h (0.4 lb/h) of the alcohol (Preparation A above), 182 g/h (0.4 lb/h) of ammonia, and 27 L/h of hydrogen. The reactor was at 13.9 MPa (2000 psig) and 205°C. The crude reactor effluent was charged to a clean dry kettle. It was then nitrogen stripped to 75°C then placed under vacuum and heated to 100°C. The product had the following analysis:

| | meq/gram |
|---|---|
| Total acetylatables | 1.08 |
| Total amine | 1.05 |
| Primary amine | 1.04 |

### C. Preparation of the Reaction Product of 4-Methyl-2-Morpholinone and Alkoxypolyoxypropylene Amine

A 2-litre, three-necked flask equipped with a thermometer, stirrer, and nitrogen outlet was charged with 1563 grams of alkoxypolyoxypropylene amine (Preparation B) and 189 grams of 4-methyl-2-morpholinone. The mixture was heated at 150°C for three hours. The resulting product had the following analysis:

| | meq/gram |
|---|---|
| Total acetylatables | 1.04 |
| Total amine | 1.00 |

and may be represented by the formula: 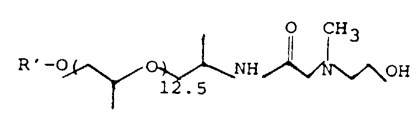 where R' represents a C₁₆-C₁₈ aliphatic radical.

### EXAMPLE II

A reaction product was prepared in a manner similar to Example I, except that 13.5 moles of propylene oxide with nonylcyclohexanol was employed in the reaction in making Preparation A. The resulting product is represented by the formula: 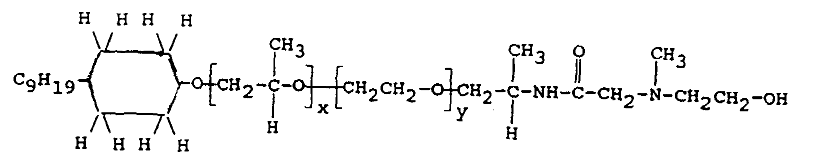 in which x = 12.5 and y = 0.

### EXAMPLE III

A reaction product was prepared in a manner similar to Example I, except 13.8 moles of a mixture of ethylene oxide and propylene oxide with a mixture of C₁₆ and C₁₈ aliphatic alcohols (EPAL 1618) were employed in the reaction making Preparation A. The product may be represented by the formula: 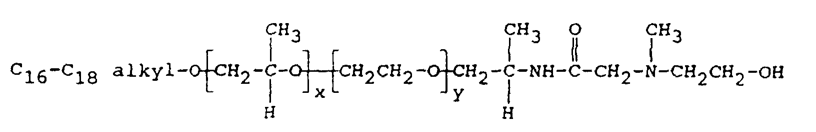 in which x has a value of 9.7 and y has a value of 4.2.

### EXAMPLE IV

Example IV was prepared similar to Example III, except that x had a value of 8.9 and y had a value of 1.7.

The additive of the invention was tested in motor fuels in comparison to commercial fuel compositions to demonstrate its effectiveness for reducing intake valve deposits and combustion chamber defaults.

### Honda Generator Test

A test was developed to determine the intake valve detergency of an additive as well as to determine whether the additive will cause the intake valve to stick.

In small four-cylinder gasoline powdered engines, the intake valves accumulate large amounts of deposits which interfere with the operation of the engine. A good detergent/dispersant is required to prevent the build up of these deposits. The Honda Generator test was developed to measure the activity of additives in preventing the build up of intake valve deposits (IVD) (keep clean). The measurements are carried out in two ways: (1) the intake valves at the end of the run are rated using the CRC method of rating (a valve with a rating of 10 is perfectly clean, and a valve rating of 6 or less denotes heavy deposit levels); and (2) intake valve deposit weights (in grams) are determined.

### Test Equipment

The equipment for the Intake System Deposit/Intake Valve Stickiness Test comprises an electrical generator driven by a current technology gasoline engine, similar in many characteristics to modern vehicle engines. The generator set design allows the engine to be easily loaded by using the electrical generator as a dynamometer for the engine. The set operates at a governed speed of 3600 rpm and incorporates a twin cylinder, overhead camshaft, water-cooled engine described below in Table II.

**Table II**

| Engine Data for ES6500 Honda Generator | |
|---|---|
| Type: 4-stroke | Overhead cam, 2 cylinder |
| Cooling System: | Liquid cooled |
| Displacement: | 359 cm³ |
| Bore x Stroke: | 58 x 68 mm |
| Construction: | Aluminium head and block, fixed cast iron cylinder liners |
| Compression: | 8.5:1 |
| Maximum Power: | 9.1 Kw/3600 rpm |
| Maximum Torque: | 240 Kg-cm |
| Fuel System: | Carburettor |
| Recommended Fuel: | Unleaded gasoline with min 86 (R+M)/2 octane |

The results of these tests are set forth in Table III below.

**Table III**

| Honda Test Results | | |
|---|---|---|
| | Example I | Commercial Additive |
| CRC Valve Rating | 9.60 | 6.03 |
| IVD Weight, g. | 0.004 | 0.269 |
| Stickiness | None | None |

The motor fuel containing the additive of the invention gave excellent CRC valve ratings, virtually no deposits on the intake valves (4 mg or less), and exhibited no stickiness. The commercial additive package showed a relatively poor CRC rating and had 269 mg of IVD deposits. The commercial additive was free of valve stickiness. In this test, the additive of Example I in a motor fuel demonstrated excellent detergency and intake valve deposit keep clean properties.

The premium motor fuel described above was employed in further Honda Engine studies testing the various additives of the invention. Fuel compositions were prepared and evaluated neat and at 100 PTB (0.285 Kg/m³). The engine test involved running the test fuel in the engine for 80 hours. The engine was then dismantled and the CRC ratings given for intake valve deposits (IVD), deposits weight, piston crown rating (PC), combustion chamber rating (CC), and a stickiness rating (PUSH) from light (L) to heavy (H). The test results are given in Table IV below.

**Table IV**

| Honda Generator Study of Structure to Detergency | | | | | | | | |
|---|---|---|---|---|---|---|---|---|
| | Combustion Chamber Amount of Addition CRC Rating | | | | Intake CRC | Avg.Wt. (mg) | Valve Lbs. | Valve g. |
| | Kg/m³ | PTB¹ | PC² | CC³ | | | | |
| Commercial Fuel Additive | 1.076 | 377 | 7.56 | 7.42 | 9.80 | 5.5 | 1.8 | 817 |
| Commercial polyether amine | 0.428 | 150 | 8.20 | 8.24 | 9.90 | 3.8 | 0.2 | 91 |
| Example I | 0.285 | 100 | 7.55 | 8.58 | 9.65 | 4.3 | 0.5 | 227 |
| Example II | 0.285 | 100 | 7.77 | 8.36 | 9.85 | 7.5 | 0.20 | 91 |
| Example III | 0.285 | 100 | 7.71 | 8.18 | 9.85 | 0.1 | 0.04 | 18 |
| Example IV | 0.285 | 100 | 8.38 | 8.33 | 9.8 | 5.5 | 0.4 | 182 |

| | | | | | | | | |
|---|---|---|---|---|---|---|---|---|
| ¹PTB = Pounds per Thousand Barrels | | | | | | | | |
| ²PC = Piston Crown | | | | | | | | |
| ³CC = Combustion Crown | | | | | | | | |

### Combustion Chamber Deposit Test

A Ford 5.0 litre engine was set up to determine combustion chamber deposit levels and intake valve deposit levels for gasoline additives. Results indicate that the additive of this invention gives equivalent combustion chamber deposit weights to unleaded base fuel. Valve deposit weight is considerably below that of base fuel.

**Table V**

| Detergency of Three Experimental Polyether Amines Test in the Ford 5.0 L Combustion Chamber Test | | | |
|---|---|---|---|
| Experimental Polyether Amine | Piston Top (g) | Combustion Chamber (g) | Valve Deposits (mg) |
| Example I | 1.3021 | 0.8650 | 52.4 |
| Commercial Fuel Additive | 1.1889 | 1.0468 | 16.3 |
| Unleaded Base Fuel | 1.0879 | 0.8935 | 123.7 |

### Thermal Gravimetric Analysis (TGA)

TGA establishes the uniqueness of the hydrocarbyl oxypolyoxyalkylene morpholinones of the invention. Examination of TGA data in Table VI below indicates that Run 2 (Example I) is considerably more thermally labile than the products tested in Runs 1, and 3 to 5, inclusive. For example, at 200°C 85.5% of Example I is decomposed, compared to 41.4 to 61.1% for Runs 1, 3 and 4, and only 34.5% for Run 5. Only 4.3% residue remains for Run 2 (Example I) at 295°C, indicating that it does not leave appreciable residue. Therefore, this polyether aminemorpholinone detergent should leave very clean intake valves and combustion chambers since it doe not leave much deposits.

**Table VI**

| | | % Volatility Loss | |
|---|---|---|---|
| Run | | 200°C | 295°C |
| 1 | Competitive Additive | 41.4 | 95.5 |
| 2 | Example I | 85.5 | 95.7 |
| 3 | Commercial Additive polyether amine | 61.1 | 95.1 |
| 4 | Commercial Additive | 54.3 | 89.2 |
| 5 | Commercial Additive oligomeric polyamine | 34.5 | 62.8 |

The above results demonstrate that the additive of the invention, Run 2, has an enhanced rate of decomposition as compared to commercial additives, and this property leads to surprisingly clean engine combustion chambers.

## Claims

1. A method of preparing an amidoalkanolamine composition having the formula: 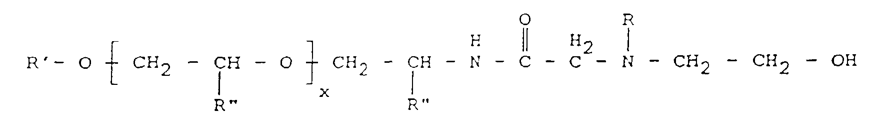 wherein
R is a monovalent aliphatic radical having 1 to 10 carbon atoms,
R' is a hydrocarbyl radical having 8 to 30 carbon atoms;
R" represents methyl or a mixture of hydrogen and methyl radicals; and
x is 5 to 50,
characterized by reacting a 4-substituted -2-morpholinone having the formula: 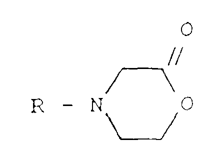 with a hydrocarbyloxypolyoxyalkylene amine having the formula: 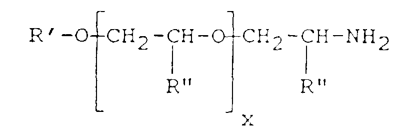 wherein R, R', R" and x have the meanings as defined above.

2. A method according to Claim 1, characterized in that R is methyl, ethyl or propyl.

3. A method according to Claim 1 or 2, characterized in that R' is an alkyl, alicyclic or alkylalicyclic radical.

4. A method according to any one of Claims 1 to 3, characterized in that the groups R" are a mixture of methyl and hydrogen in a mole ratio from 2:3 to 9.99:0.01.

5. A method according to any one of Claims 1 to 4, characterized in that the 4-substituted-2-morpholinone and the hydrocarbyloxypoly-oxyalkylene amine are reacted at a temperature of 10 to 200°C.

## Patentansprüche

1. Ein Verfahren zur Herstellung einer Amidoalkanolaminzusammensetzung mit der Formel: 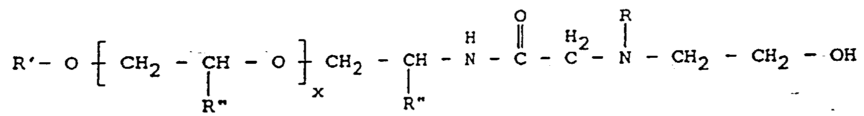 in der
R ein einwertiger aliphatischer Rest mit 1 bis 10 Kohlenstoffatomen ist,
R' ein Kohlenwasserstoffrest mit 8 bis 30 Kohlenstoffatomen ist;
R" Methyl oder eine Mischung aus Wasserstoff und Methylresten darstellt; und
x 5 bis 50 ist,
dadurch gekennzeichnet, daß ein 4-substituiertes 2-Morpholinon mit der Formel: 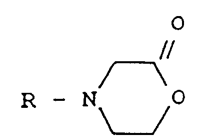 mit einem Kohlenwasserstoffoxypolyoxyalkylenamin mit der Formel: 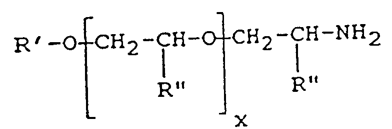 in der R, R', R" und x die Bedeutungen haben, wie oben definiert, umgesetzt wird.

2. Ein Verfahren nach Anspruch 1, dadurch gekennzeichnet, daß R Methyl, Ethyl oder Propyl ist.

3. Ein Verfahren nach Anspruch 1 oder 2, dadurch gekennzeichnet, daß R' ein Alkylrest, alicyclischer Rest oder alkylalicyclischer Rest ist.

4. Ein Verfahren nach einem der Ansprüche 1 bis 3, dadurch gekennzeichnet, daß die Gruppen R" eine Mischung aus Methyl und Wasserstoff in einem Molverhältnis von 2:3 bis 9,99:0,01 sind.

5. Ein Verfahren nach einem der Ansprüche 1 bis 4, dadurch gekennzeichnet, daß das 4-substituierte 2-Morpholinon und das Kohlenwasserstoffoxypolyoxyalkylenamin bei einer Temperatur von 10 bis 200°C umgesetzt werden.

## Revendications

1. Procédé de préparation d'une composition d'amido-alcanolamine ayant la formule : 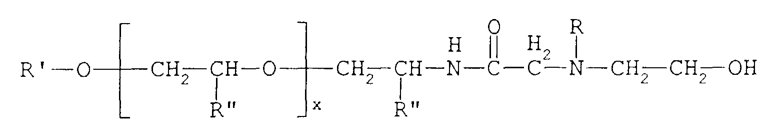 dans laquelle :
R est un radical aliphatique monovalent ayant de 1 à 10 atomes de carbone ;
R' est un radical hydrocarbyle ayant de 8 à 30 atomes de carbone ;
R" représente un radical méthyle ou un mélange de radicaux hydrogène et méthyle ; et
x est de 5 à 50,
caractérisé en ce que l'on fait réagir une 2-morpholinone substituée en 4 ayant la formule : 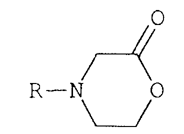 avec une hydrocarbyloxypolyoxyalkylène amine ayant la formule : 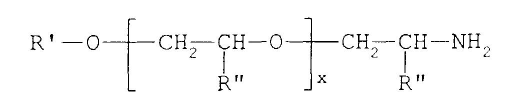 dans laquelle R, R', R" et x ont les significations définies ci-dessus.

2. Procédé selon la revendication 1, caractérisé en ce que R est un radical méthyle, éthyle ou propyle.

3. Procédé selon la revendication 1 ou 2, caractérisé en ce que R' est un radical alkyle, alicyclique ou alkylalicyclique.

4. Procédé selon l'une quelconque des revendications 1 à 3, caractérisé en ce que les groupes R" sont un mélange de radicaux méthyle et hydrogène dans un rapport molaire allant de 2/3 à 9,99/0,01.

5. Procédé selon l'une quelconque des revendications 1 à 4, caractérisé en ce que l'on fait réagir la 2-morpholinone substituée en 4 et l'hydrocarbyloxypolyoxyalkylène amine à une température de 10 °C à 200 °C.
